# EUROPEAN PATENT SPECIFICATION

(11) **EP 2 123 548 B1**
(45) Date of publication and mention of the grant of the patent: **27.06.2018**
(21) Application number: 08722336.8
(22) Date of filing: 18.03.2008
(51) Int. Cl.: B62J 1/02, B62J 1/12, B62J 25/00, B62K 19/46, B62K 21/14

(54) **TWO-WHEELED MOTOR VEHICLE**
ZWEIRÄDRIGES MOTORFAHRZEUG
VÉHICULE À MOTEUR À DEUX ROUES

(30) Priority: 19.03.2007 JP 2007071208; 19.03.2007 JP 2007071209; 19.03.2007 JP 2007071210
(43) Date of publication of application: 25.11.2009
(73) Proprietor: Yamaha Hatsudoki Kabushiki Kaisha, Iwata-shi, Shizuoka 438-8501 (JP)
(72) Inventor: IMAMURA, Mitsutoshi, Iwata-shi Shizuoka 438-8501 (JP); NISHIDA, Kazuhiro, Iwata-shi Shizuoka 438-8501 (JP)
(74) Representative: Zimmermann, Tankred Klaus
(86) International application number: PCT/JP2008/054942
(87) International publication number: WO 2008/123059

(56) References cited:
- EP-A2- 1 063 155
- WO-A1-2006/006434
- WO-A1-2006/006434
- GB-A- 139 924
- JP-A- 8 020 373
- JP-A- 07 187 044
- JP-A- 07 246 966
- JP-A- 09 011 958
- JP-A- H11 255 163
- JP-A- 2000 038 179
- JP-A- 2001 039 373
- JP-A- 2003 081 168
- JP-A- 2003 226 281
- JP-A- 2005 067 588
- JP-A- 2006 046 326

## Description

### TECHNICAL FIELD

The present invention relates to a motorcycle.

### BACKGROUND ART

For example, a scooter type motorcycle comprises a so-called unit swing type engine unit. The engine unit is constructed such that an engine body and a continuously variable transmission are made integral with each other, the engine unit being supported by a body frame to be able to swing vertically. A rear wheel is arranged at a rear end of the engine unit. A head pipe on the body frame supports a front fork to make the same steerable, and the front fork has a front wheel arranged at a lower end thereof and has a handle bar arranged at an upper end thereof. A seat is arranged on the body frame and foot putting devices are arranged on left and right sides of the body frame.

Generally, in such a motorcycle, an engine unit is supported through a linkage by a body frame from the viewpoint of inhibiting engine vibrations from being transmitted to a rider through the body frame (see, for example, Fig. 2 of JP-A-9-11958) .

JP 2006-046326 A, which is considered as the closest prior art, describes a motorcycle having an engine with a balancer for suppressing at an arbitrary position vibrations caused by a couple of force generated by a primary inertial force of a crank and an inertial force of a balancer.

### SUMMARY OF THE INVENTION

It is an object of the invention to provide a motorcycle capable of heightening a feeling of directness at the time of start and acceleration and inhibiting engine vibrations and vibrations from the road surface from being transmitted to a rider.

This object is achieved by a motorcycle of claim 1.

In a construction, in which an engine unit is supported through a linkage by a body frame, like the construction described above, even when a throttle is operated to open, in particular, at the time of start and acceleration, a delay in responsiveness is liable to generate such that acceleration begins one tempo late. Therefore, there is caused a problem that a feeling of directness at the time of start or at the time of acceleration is insufficient.

Such insufficiency in feeling of directness is considered to be mainly attributable to a linkage. Hereupon, it is conceivable to arrange a balancer mechanism, which inhibits generation itself of engine vibrations, on an engine unit and to have the engine unit directly supported by a body frame, thereby heightening a feeling of directness.

However, the balancer mechanism involves a problem that it can suppress engine vibrations at a specific frequency due to, for example, a primary inertial force but cannot suppress secondary vibrations or 0.5 degree vibrations. In addition, when the balancer mechanism should suppress all vibrations, it becomes complex and expensive, and so it is hard to adopt it.

In this manner, even when measures of simply canceling a linkage and arranging a balancer mechanism on an engine unit are adopted, it is difficult to improve a feeling of directness while inhibiting transmission of vibrations to a rider.

The invention has been thought of in view of the conventional situation and provides a motorcycle capable of heightening a feeling of directness at the time of start and acceleration and inhibiting engine vibrations and vibrations from the road surface from being transmitted to a rider.

A motorcycle according to the invention comprises a vehicle body having a body frame, an engine unit having a balancer mechanism, which inhibits engine vibrations caused by a primary inertial force, and supported directly on the body frame to be able to swing vertically, and a damping mechanism arranged on that distal portion of a vibration transmission path, at which a rider's body and the vehicle body contact with each other.

According to the invention, which is defined by claim 1, it is possible to increase a feeling of directness at the time of start and acceleration and to inhibit engine vibrations and vibrations from the road surface from being transmitted to a rider.

### BRIEF DESCRIPTION OF THE DRAWINGS

[Fig. 1] Fig. 1 is a side view showing a motorcycle according to an embodiment of the invention.
[Fig. 2] Fig. 2 is a side view showing a body frame of the motorcycle.
[Fig. 3] Fig. 3 is a plan view showing the body frame.
[Fig. 4] Fig. 4 is a side view showing an engine unit, which is supported by the body frame to be able to swing vertically.
[Fig. 5] Fig. 5 is a side view showing a balancer mechanism of the engine unit.
[Fig. 6] Fig. 6 is a cross-sectional view showing the balancer mechanism.
[Fig. 7] Fig. 7 is a cross-sectional view (cross-sectional view taken along the line VII-VII in Fig. 2) showing a suspension portion of the engine unit.
[Fig. 8] Fig. 8 is a side view showing a steering handle arranged on the body frame.
[Fig. 9] Fig. 9 is a plan view showing the steering handle.
[Fig. 10] Fig. 10 is a sectional, plan view showing a damper arranged on the steering handle.
[Fig. 11] Fig. 11 is a cross-sectional view (cross sectional view taken along the line XI-XI in Fig. 9) showing a portion of the steering handle mounted to a front fork.
[Fig. 12] Fig. 12 is a rear view showing the mounted portion.
[Fig. 13] Fig. 13 is a side view showing a seat arranged on the body frame.
[Fig. 14] Fig. 14 is a plan view showing a storage box arranged on the body frame.
[Fig. 15] Fig. 15 is a cross-sectional view (cross-sectional view taken along the line IX-IX in Fig. 14) showing the storage box.
[Fig. 16] Fig. 16 is a cross-sectional view (cross-sectional view taken along the line X-X in Fig. 14) showing the storage box.
[Fig. 17] Fig. 17 is a cross-sectional view (cross-sectional view taken along the line XI-XI in Fig. 14) showing the storage box.
[Fig. 18] Fig. 18 is a cross-sectional view (cross-sectional view taken along the line XII-XII in Fig. 14) showing the storage box.
[Fig. 19] Fig. 19 is a cross-sectional view (cross-sectional view taken along the line XIII-XIII in Fig. 14) showing the storage box.
[Fig. 20] Fig. 20 is a view showing an elastic member arranged between the body frame and the storage box, Fig. 20(a) is a plan view, and Fig. 20(b) is a side view.
[Fig. 21] Fig. 21 is a view showing an elastic member according to a modification, Fig. 21(a) is a plan view, and Fig. 21(b) is a side view.
[Fig. 22] Fig. 22 is a plan view showing an elastic member according to a further modification.
[Fig. 23] Fig. 23 is a side view showing a footrest device arranged on the body frame.
[Fig. 24] Fig. 24 is a cross-sectional view (cross-sectional view taken along the line IX-IX in Figs. 23 and 26) showing the footrest device.
[Fig. 25] Fig. 25 is a cross sectional view (cross sectional view taken along the line X-X in Fig. 23) showing the footrest device.
[Fig. 26] Fig. 26 is a plan view showing a foot board of the footrest device.
[Fig. 27] Fig. 27 is a side view showing the foot board.
[Fig. 28] Fig. 28 is a cross-sectional view (cross-sectional view taken along the line XIII-XIII in Fig. 26) showing the foot board.
[Fig. 29] Fig. 29 is a cross-sectional view taken along the line XIV-XIV in Fig. 26.
[Fig. 30] Fig. 30 is a cross-sectional view taken along the line XV-XV in Fig. 26.
[Fig. 31] Fig. 31 is a cross-sectional view taken along the line XVI-XVI in Fig. 27.
[Fig. 32] Fig. 32 is a plan view showing a foot mat of the footrest device.
[Fig. 33] Fig. 33 is a side view showing the foot mat.
[Fig. 34] Fig. 34 (a) is a cross sectional view showing the foot mat and Fig. 34(b) is a rear view showing the foot mat.

### DESCRIPTION OF REFERENCE NUMERALS AND SIGNS

- 1:: motorcycle
- 1A:: vehicle body
- 2:: body frame
- 5:: steering handle
- 5a:: handle bar
- 6:: front fork
- 8:: engine unit
- 9:: seat
- 27:: balancer mechanism
- 33:: storage box (vehicle body constituent part)
- 43:: first elastic member (elastic member)
- 44:: second elastic member (elastic member)
- 124:: elastic member
- 125:: weight
- 130:: footrest device
- 131:: foot bracket
- 132:: elastic member
- 133:: foot board
- 134:: foot mat

### BEST MODE FOR CARRYING OUT THE INVENTION

An embodiment of the invention will be described below with reference to the accompanying drawings.

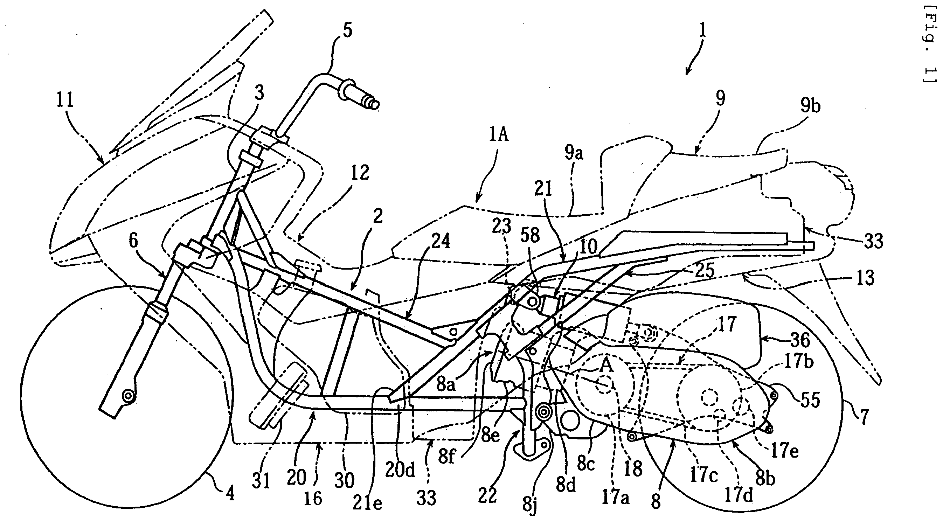

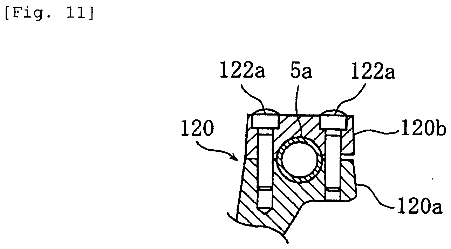

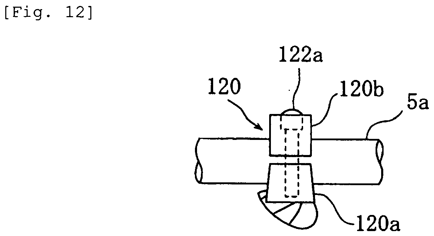

Figs. 1 to 34 are views illustrating a motorcycle according to an embodiment of the invention. In addition, front and rear, and left and right referred to in the descriptions of the embodiment refer to front and rear, and left and right as seen in a state of being seated on a seat.

### <Whole construction of motorcycle>

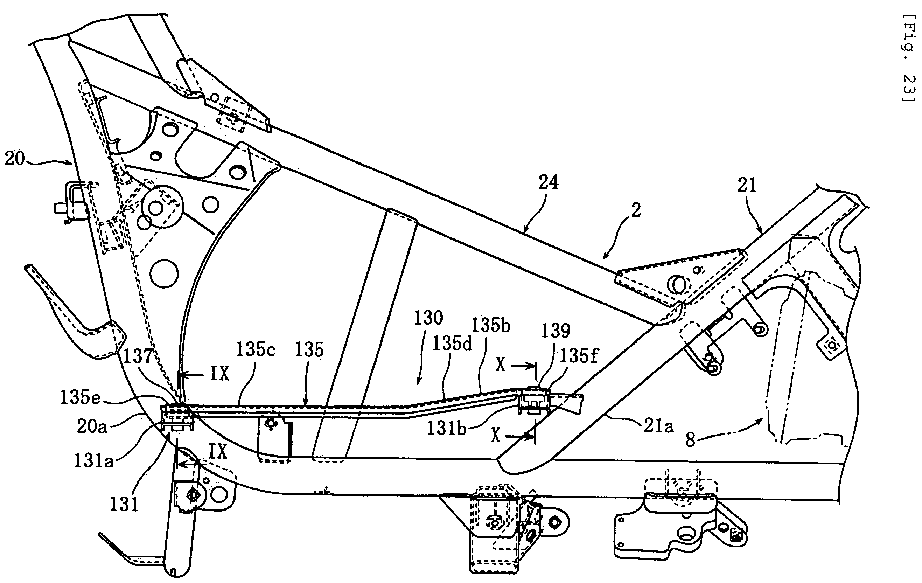

In the drawings, reference numeral 1 denotes a scooter-type motorcycle. The motorcycle 1 comprises a unit swing-type engine unit 8, an underbone-type body frame 2, by which the engine unit 8 is supported to be able to swing vertically, a front fork 6 supported by a head pipe 3 of the body frame 2 to be made steerable left and right, and a steering handle 5 mounted to an upper end of the front fork 6. Also, the motorcycle 1 comprises a straddle-type seat 9 supported by the body frame 2, and footrest devices 130, 130 arranged on left and right sides of the body frame 2 (see Fig. 23).

The seat 9 comprises a main seat 9a supported to be able to turn forward and upward about a front edge thereof, and a tandem seat 9b supported to be able to turn rearward and upward about a rear edge thereof.

Also, the motorcycle 1 comprises a front wheel 4 mounted to a lower end of the front fork 6, a rear wheel 7 mounted to a rear end of the engine unit 8, and a rear cushion 10 interposed between the engine unit 8 and the body frame 2.

Also, the motorcycle 1 comprises a front cover 11, which covers a front side of the head pipe 3, a leg shield 12, which covers a rear side of the head pipe 3 and the front of rider's legs, a side cover 13, which covers a periphery of a lower portion of the seat 9, and a bottom cover 16, which covers lower portions of the footrest devices 130 from the side. The whole body frame 2 is covered by the front cover 11, the leg shield 12, the side cover 13, and the bottom cover 16.

The body frame 2 includes the head pipe 3 positioned at a front end of the body frame 2, left and right downtubes 20, 20 diverging outwardly of the head pipe 3 in a vehicle width direction to extend rearward and downward and extending substantially horizontally and rearward from lower ends thereof, left and right seat rails 21, 21 extending rearward and obliquely upward from intermediate portions of the left and right downtubes 20 and extending substantially horizontally and rearward from rear ends thereof, and left and right engine suspension frames 22, 22, which extend vertically from rear ends of the left and right downtubes 20 and upper ends of which are joined to the seat rails 21.

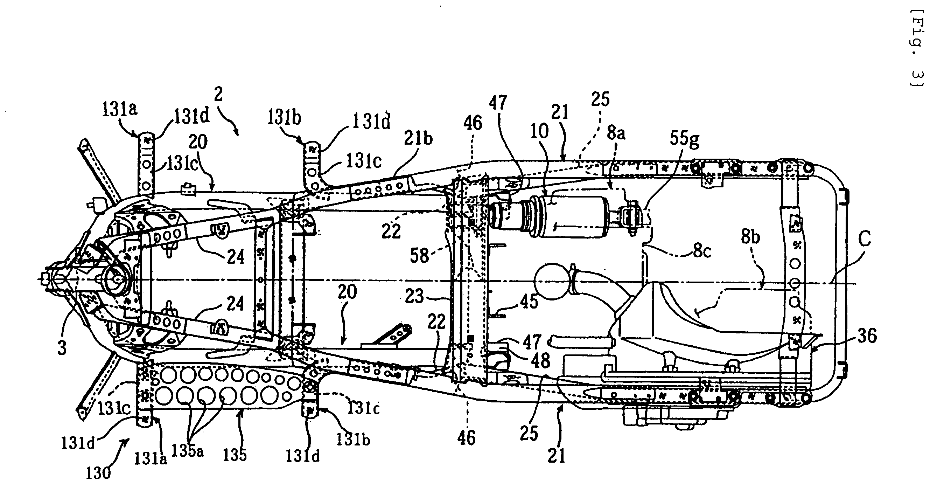

Further, the body frame 2 includes left and right upper tubes 24, 24, which extend substantially straight and rearward from the head pipe 3 and rear ends of which are joined to the seat rails 21, left and right seat stays 25, 25 connecting between the left and right engine suspension frames 22 and the seat rails 21, and a cross member 23 (see Fig. 3) connecting the vicinities of connections of the left and right rails 21 to the engine suspension frames 22 in the vehicle width direction. A front end of the rear cushion 10 is connected to the cross member 23.

A fuel tank 30 is arranged at a front end in the body frame 2 and a radiator 31 is arranged below the fuel tank 30. A storage box 33 open to the top is arranged behind the fuel tank 30. A front half of an opening of the storage box 33 is covered by the main seat 9a so it may be opened and closed and a rear half thereof is covered by the tandem seat 9b so it may be opened and closed.

The engine unit 8 is formed by integrally joining an engine body 8a and a transmission case 8b, in which a continuously variable V-belt-type transmission 17 is accommodated. An air cleaner 36 is fixed to an upper wall surface of the transmission case 8b.

The engine body 8a comprises a water-cooled four-stroke single cylinder engine mounted at a cylinder axis A directed substantially horizontally. The engine body 8a comprises a crank shaft 18 arranged substantially horizontally in the vehicle width direction, a crank case 8c, in which the crank shaft 18 is accommodated, a cylinder block 8d, a cylinder head 8e, and a head cover 8f, which are jointed sequentially to a front mating surface of the crank case 8c.

The continuously variable V-belt-type transmission 17 includes a drive pulley 17a arranged at a left end of the crank shaft 18, which projects into the transmission case 8b, a driven pulley 17b arranged at a rear end of the transmission case 8b, and a V-belt 17c wound round the drive pulley 17a and the driven pulley 17b.

A main shaft 17d and a drive shaft 17e, to which rotation of the driven pulley 17b is transmitted, are arranged in the transmission case 8b and the rear wheel 7 is mounted to the drive shaft 17e.

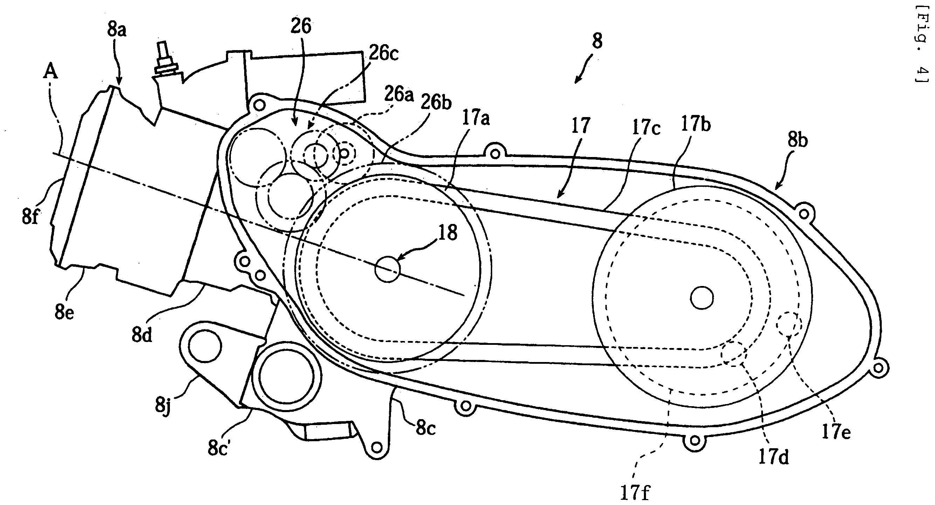

The continuously variable V-belt-type transmission 17 includes a winding diameter varying mechanism 26 (see Fig. 4) . The winding diameter varying mechanism 26 is one, which variably controls a belt winding diameter of the drive pulley 17a between LOW position and TOP position. The winding diameter varying mechanism 26 is controlled by a controller (not shown) on the basis of a manipulated variable of an accelerator pedal by a rider, engine speed, vehicle speed, etc.

As shown in Fig. 4, the winding diameter varying mechanism 26 includes a drive motor 26a, a reciprocating drive gear 26b, which moves a moving side sheave (not shown) of the drive pulley 17a in an axial direction to vary a winding diameter, and a reduction gear group 26c, which transmits rotation of the drive motor 26a to the reciprocating drive gear 26b.

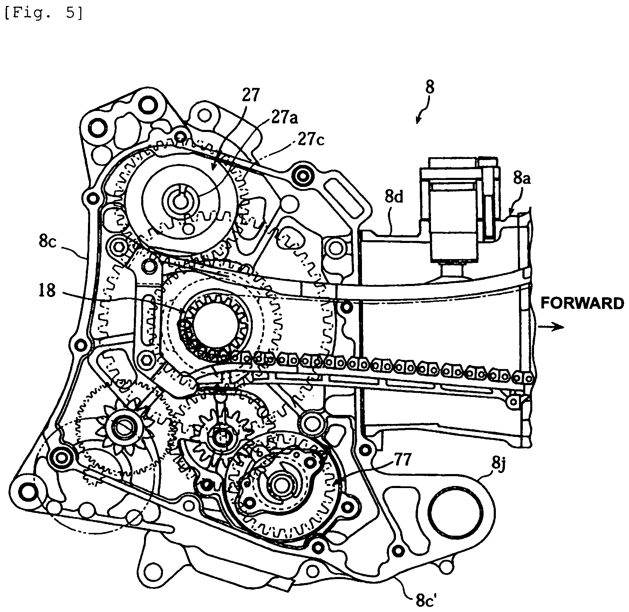

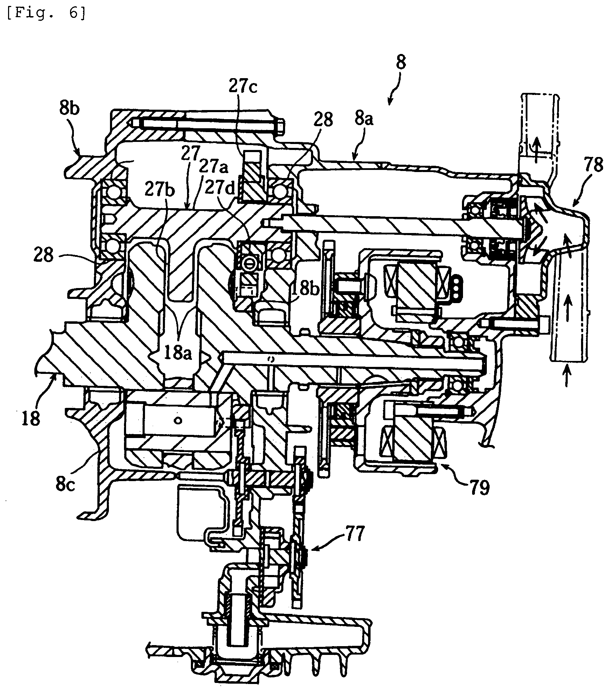

As shown in Figs. 5 and 6, the engine unit 8 comprises a balancer mechanism 27, which suppresses engine vibrations due to a primary inertial force. The balancer mechanism 27 includes a balancer shaft 27a. The balancer shaft 27a is structured so as to rotate at the same rotational speed as that of the crank shaft 18 in a direction reverse thereto.

The balancer shaft 27a is arranged above the crank shaft 18 and in parallel to the crank shaft 18. The balancer mechanism 27 includes a balancer weight 27b formed integrally with the balancer shaft 27a. As shown in Fig. 6, the balancer weight 27b extends in a direction perpendicular to the balancer shaft 27a. The balancer weight 27b is positioned between left and right crank arms 18a, 18a of the crank shaft 18.

Left and right ends of the balancer shaft 27a are supported on the crank case 8c with bearings 28, 28 therebetween. A balancer gear 27c is joined to the balancer shaft 27a inside the right bearing 28 with a damper member 27d therebetween. The balancer gear 27c meshes with a drive gear 18b, which is joined to the crank shaft 18.

In addition, reference numeral 77 denotes an oil pump, by which a lubricating oil at the bottom of the crank case 8c is pressure fed to respective lubricated parts of the engine body 8a. Reference numeral 78 denotes a cooling water pump, which pressure feeds cooling water to respective cooling water jackets of the engine body 8a. Reference numeral 79 denotes an alternator.

As shown in Fig. 4, the engine unit 8 comprises a centrifugal clutch 17f. The centrifugal clutch 17f is arranged to be coaxial with the crank shaft 18 and the driven pulley 17b. The centrifugal clutch 17f connects when the rotating speed of the crank shaft 18, that is, engine speed becomes equal to or higher than a predetermined rotating speed, and disconnects when engine speed becomes less than the predetermined rotating speed. The centrifugal clutch 17f disconnects at the time of idling and connects at the start and in traveling.

### <Outline of damping mechanism>

In addition, a portion of the motorcycle 1 except the engine unit 8, the front wheel 4 and the rear wheel 7 is referred to as vehicle body 1A (see Fig. 1) in the specification of the present application. When riding on the motorcycle 1, a rider is on contact with left and right grips 5b, 5c of the steering handle 5, the seat 9, and the footrest devices 130 on the vehicle body 1A. In addition, engine vibrations or vibrations from the road surface are transmitted to a rider through the vehicle body 1A, and the left and right grips 5b, 5c, the seat 9, and the footrest devices 130 constitute a distal end portion of a vibration transmission path. As described below, according to the embodiment, a damping mechanism is arranged on the distal portion of the vibration transmission path.

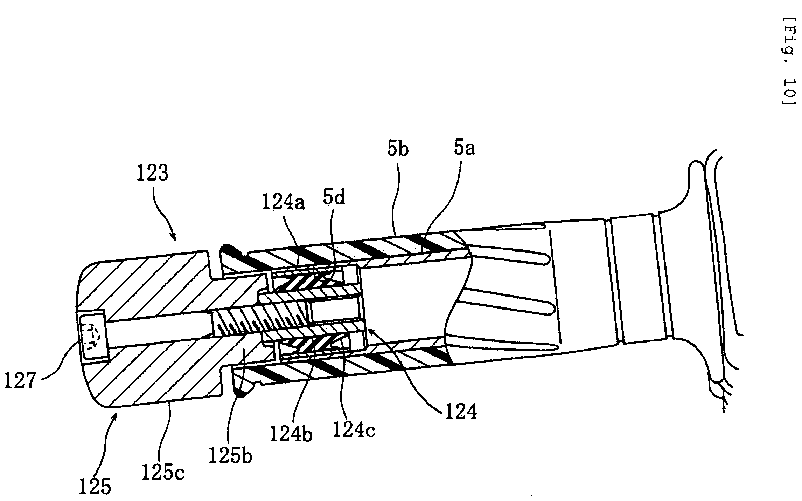

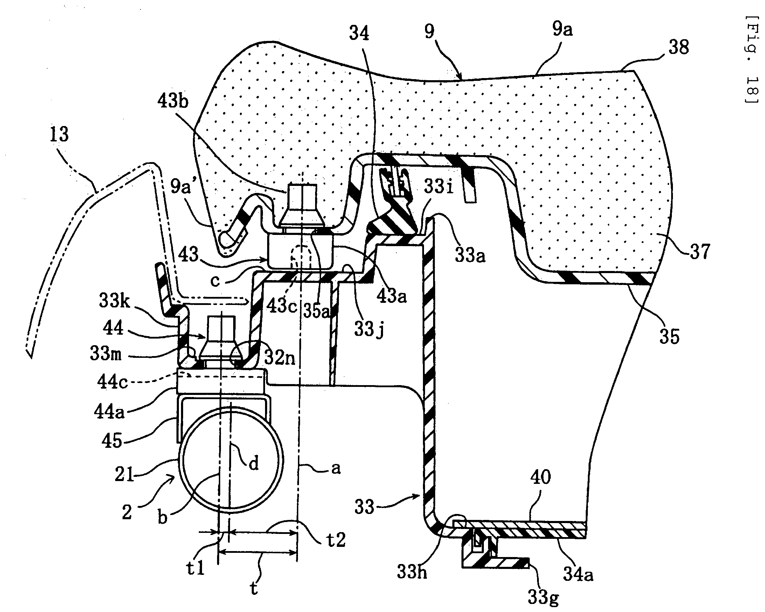

While details will be described later, an article storage box 33 made of a resin, a first elastic member 43, and a second elastic member 44 are arranged as the damping mechanism between the seat 9 and the body frame 2 as shown in Fig. 18. Also, as shown in Fig. 10, elastic members 124 and weights 123 are arranged as the damping mechanism at ends (referred to below as second distal ends) of the left and right grips 5b, 5c. Further, an elastic member 132, rubber grommets 136, and a sponge material 141 are arranged as the damping mechanism on the footrest device 130 (referred to below as third distal end) .

### <Support construction of engine unit>

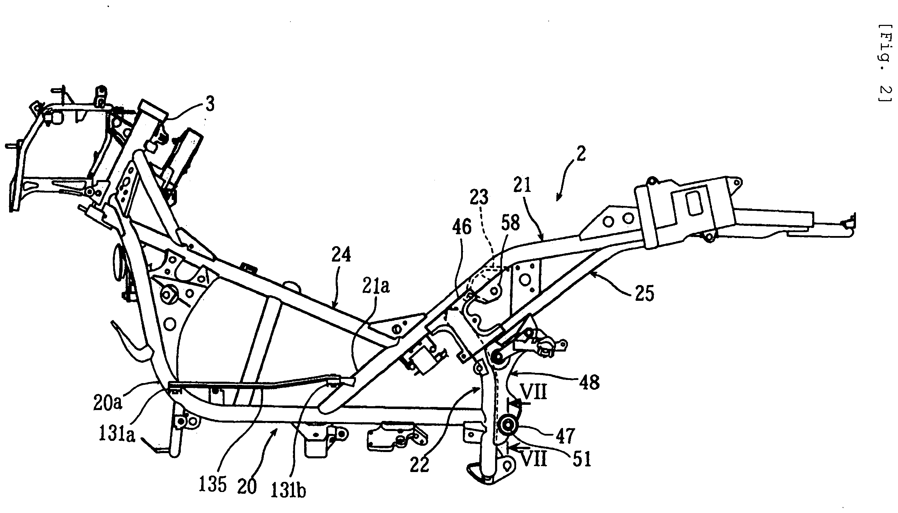

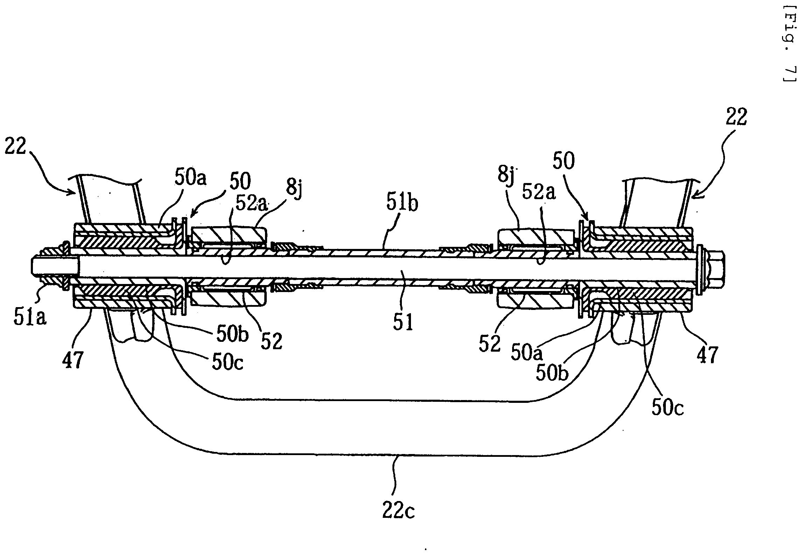

As shown in Fig. 2, cylindrically-shaped pivot members 47, 47 are formed in the vicinity of connections of the left and right engine suspension frames 22 to the downtubes 20. As shown in Fig. 7, the left and right pivot members 47 are arranged with axes thereof directed in the vehicle width direction and elastic bushes 50 are inserted into the pivot members 47. The elastic bushes 50 comprise an outer cylinder 50a, an inner cylinder 50b, and rubber members 50c interposed between the outer cylinder 50a and the inner cylinder 50b, and are structured such that the rubber members 50c are fixed to the outer cylinders 50a and the inner cylinders 50b.

As shown in Fig. 1, the engine unit 8 is supported directly by the left and right engine suspension frames 22, 22 of the body frame 2 and details of the construction thereof are as follows.

As shown in Fig. 7, lower ends of the left and right engine suspension frames 22 are connected integrally to each other by a lower side portion 22c. As shown in Fig. 2, the left and right cylindrically-shaped pivot members 47, 47 arranged with axes thereof directed in the vehicle width direction are fixed in the vicinity of connections of the left and right engine suspension frames 22 to the downtubes 20. As shown in Fig. 7, the elastic bushes 50, 50 described above are inserted into and fixed to the left and right pivot members 47 and a pivot shaft 51 is inserted into the elastic bushes 50, 50. The pivot shaft 51 is axially fixed by clamping of nuts 51a with the inner cylinders 50b of the elastic bushes 50, inner races 52a of bearings 52, and a collar 51b therebetween. On the other hand, the pivot shaft 51 is elastically supported by the elastic bushes 50 in a direction perpendicular to an axis thereof.

As shown in Fig. 4, a pair of left and right suspension portions 8j, 8j are formed on a front portion 8c' of a bottom wall of the crank case 8c to project forward. The left and right suspension portions 8j are positioned below the cylinder block 8d. As shown in Fig. 7, the left and right suspension portions 8j are arranged inside the left and right pivot members 47 and supported through bearings 52, 52 on the pivot shaft 51 to be able to turn. Thereby, the engine unit 8 is suspended and supported through the bearings 52 by the pivot shaft 51 to be able to swing vertically. The engine unit 8 is supported directly by the left and right pivot members 47 with the pivot shaft 51 and the elastic bushes 50 therebetween.

In this manner, the engine unit 8 is supported directly by the body frame 2. Since the engine unit 8 is supported through the elastic bushes 50, however, it is possible to inhibit engine vibrations or vibrations from the road surface from being transmitted to a rider through the body frame 2. Also, since the engine unit 8 is fixed axially to the pivot shaft 51, there is not caused such a problem that the elastic bushes 50 interpose to thereby deteriorate a feeling of rigidity in a transverse direction of a vehicle.

### <Damping mechanism of steering handle>

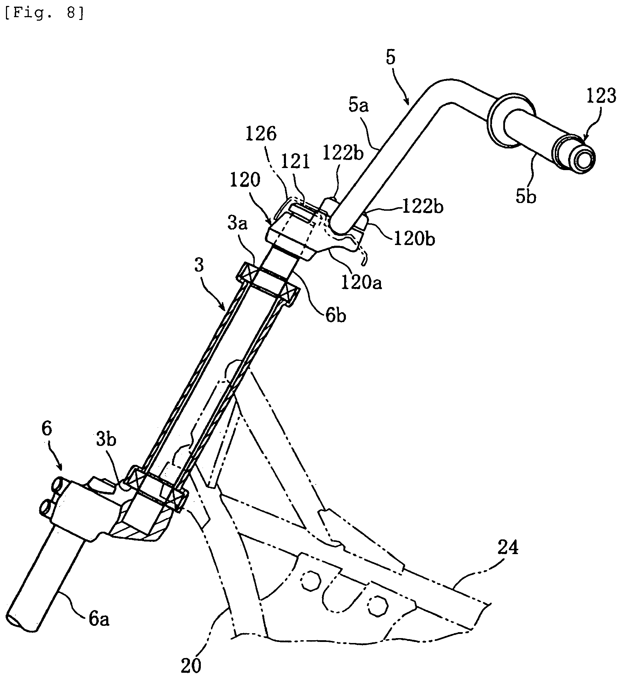

As shown in Fig. 8, the front fork 6 includes left and right fork bodies 6a, (in addition, depiction of the right fork body 6a is omitted in Fig. 8), which journal the front wheel 4, and a steering shaft 6b joined to the left and right fork bodies 6a. The steering shaft 6b is supported by bearings 3a, 3b, which are arranged at upper and lower ends of the head pipe 3, to be steerable to the left and right.

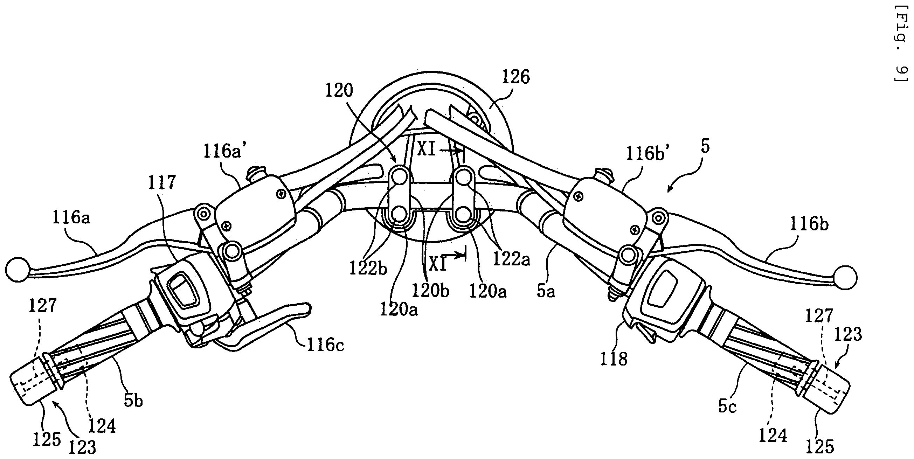

The steering handle 5 is arranged at an upper end of the steering shaft 6b. As shown in Fig. 9, the steering handle 5 includes a handle bar 5a, which is substantially U-shaped and made of a steel pipe, and the left and right grips 5b, 5c made of rubber and mounted to both left and right ends of the handle bar 5a. The left grip 5b is fitted onto and mounted to a left end of the handle bar 5a to be unable to turn. The right grip 5c is supported by a right end of the handle bar 5a to be able to turn between a fully-closed throttle position and a fully-opened throttle position.

Further, switch boxes 117, 118 are mounted inside and adjacent to the left and right grips 5b, 5c of the handle bar 5a, respectively. Brake levers 116a, 116b for braking of the rear wheel 7 and the front wheel 4 are arranged in front of the left and right grips 5b, 5c, respectively. The brake levers 116a, 116b are supported on master cylinder units 116a' , 116b' to be able to turn. In addition, reference numeral 116c denotes a parking lever.

As shown in Fig. 8, the handle bar 5a is mounted directly, that is, without any elastic member therebetween, to the steering shaft 6b through a handle holder 120. The handle holder 120 includes a bottom holder 120a and a pair of left and right upper holders 120b, 120b (see Figs. 9). The bottom holder 120a is fitted in a tapering manner onto the steering shaft 6b and fixed to the steering shaft 6b by clamping a lock nut 121.

The handle bar 5a has its center in the vehicle width direction arranged on the bottom holder 120a. Upper holders 120b cover the bottom holder 120a. As shown in Fig. 9, the left and right upper holders 120b, 120b are clamped to the bottom holder 120a by bolts 122a, 122b. Thereby, the handle bar 5a is fixed detachably and directly to the steering shaft 6b. As shown in Fig. 8, an armor cover 126 covers the bottom holder 120a and the lock nut 121 from above.

As shown in Fig. 9, dampers 123, 123 are mounted to both left and right ends of the handle bar 5a, respectively. The left and right dampers 123 include elastic members 124, 124 inserted into the left and right ends of the handle bar 5a, and weights 125, 125 mounted to the elastic members 124.

The left and right elastic members 124 comprise an outer cylinder 124a, an inner cylinder 124b, and an elastic body 124c such as rubber as shown in Fig. 10. The inner cylinder 124b is arranged in the outer cylinder 124a and female threads are formed inside the inner cylinder 124b. The elastic body 124c is interposed between the outer cylinder 124a and the inner cylinder 124b and fixed by baking or the like. The elastic members 124 are press-fitted into holding holes 5d formed in outer ends of the handle bar 5a.

The weights 125 are partially inserted into the handle bar 5a. The weights 125 comprise an inserted portion 125b, which abuts against an end surface of the inner cylinder 124b, and a weight body 125c formed contiguous to the inserted portion 125b and projecting outward from the handle bar 5a. The weight bodies 125c are formed to have substantially the same outer diameter as those of the left and right grips 5b, 5c.

Bolts 127 are inserted into axial portions of the weights 125 from outside. Tip ends of the bolts 127 are screwed into the inner cylinders 124b. Thereby, the left and right weights 125 are fixed detachably to the elastic members 124.

In this manner, the handle bar 5a is mounted directly, that is, without any elastic member therebetween, to the steering shaft 6b. Therefore, the handle bar 5a is mounted to the steering shaft 6b with a high mounting rigidity. On the other hand, the elastic members 124 interpose to thereby permit the weights 125 to be mounted to the handle bar 5a with a relatively low mounting rigidity.

### <Damping mechanism of seat>

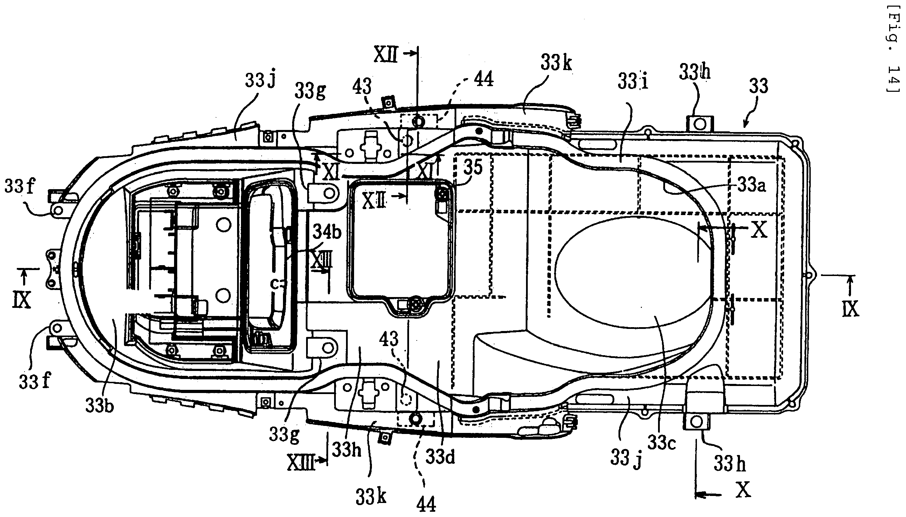

As described above, the article storage box 33 made of a resin is arranged behind the fuel tank 30 (see Fig. 1). The article storage box 33 is arranged in a space surrounded by the left and right downtubes 20, the seat rails 21, and the engine suspension frames 22. The article storage box 33 is sized to extend over a substantially total longitudinal length of the seat 9, and an opening 33a of the article storage box 33 is formed over an entire periphery (see Fig. 14).

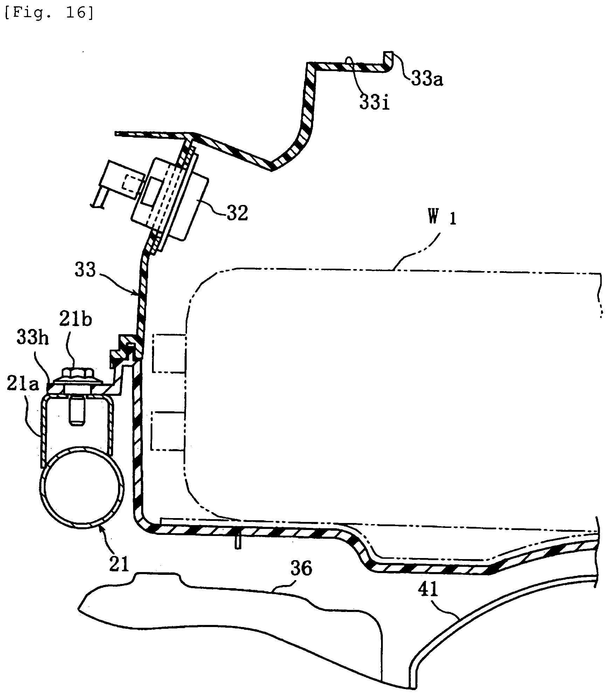

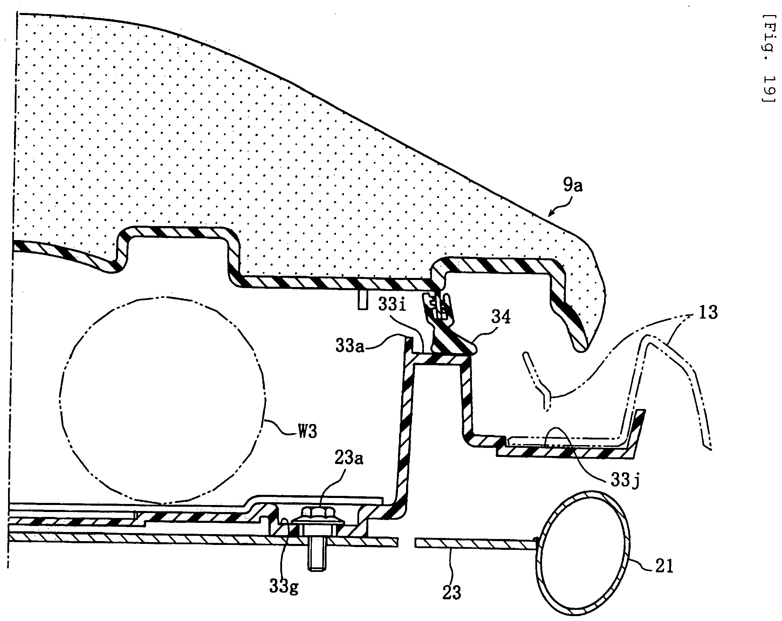

The storage box 33 is mounted and fixed directly to the body frame 2. In more detail, a pair of left and right mounting portions 33f, 33f (see Fig. 14) formed on a front edge of the storage box 33 are bolted and fixed to a cross member (not shown) fixed bridging across the left and right upper tubes 24. Further, as shown in Fig. 14, a pair of left and right mounting seats 33g, 33g are formed on a bottom wall portion of the storage box 33 at the central portion in a longitudinal direction, the mounting seats 33g, 33g being fixed to the cross member 23 by bolts 23a, 23a (see Fig. 19). Further, a pair of left and right mounting portions 33h, 33h are formed at a rear end of the storage box 33, the mounting portions 33h, 33h being fixed to portal-shaped brackets 21a, 21a, which are fixed to the left and right seat rails 21, by bolts 21b, 21b (see Fig. 16). In addition, reference numeral 32 denotes a lamp lighted when the seat 9 is opened. Further, reference numeral 36 denotes an air cleaner and 41 a rear fender, which covers an upper portion of the rear wheel 7.

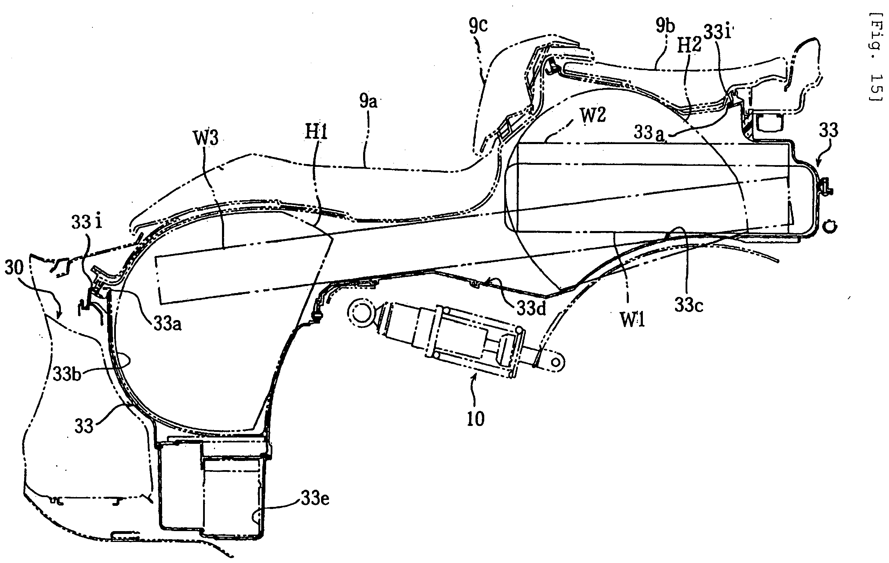

As shown in Fig. 15, the storage box 33 includes a front storage portion 33b sized to enable a helmet H1 to be accommodated therein, a rear storage portion 33c sized to enable a helmet H2, an attache case W1, or a beer case W2 to be accommodated therein, an intermediate storage portion 33d positioned between the front and rear storage portions 33b, 33c to be combined with the front and rear storage portions 33b, 33c to enable a lengthy article W3 to be accommodated, and a battery storage portion 33e being contiguous to a bottom of the front storage portion 33b to extend downward.

As shown in Fig. 18, formed substantially circumferentially on the opening 33a of the storage box 33 are a flange portion 33i, which is contiguous to the opening 33a to project outward, and a step-down portion 33j, which is formed to be outwardly contiguous to and lower by a step than the flange portion 33i.

A sealing member 34 mounted to a bottom surface of the seat 9 abuts against the flange portion 33i. Thereby, the opening 33a of the storage box 33 is sealed in a watertight manner.

Further, trough-shaped receiving portions 33k, 33k are formed on left and right sides of the storage box 33 to be outwardly contiguous to and lower by a step than the step-down portion 33j. The receiving portions 33k are inclined forward and downward along the left and right seat rails 21. Left and right edges 9a' of the seat 9 are positioned in the left and right receiving portions 33k in the left and right direction and water flowing along the seat 9 is discharged to the outside through the receiving portions 33k.

As shown in Fig. 15, the seat 9 includes a main seat 9a, on which a rider is seated, and a tandem seat 9b, which is formed separately from the main seat 9a and on which a rear occupant is seated. A back rest 9c, by which a rider's waist is supported, is arranged at a rear end of the main seat 9a.

As shown in Fig. 18, the main seat 9a and the tandem seat 9b are structured such that a seat cushion 37 is arranged on a bottom seat plate 35 and an outer layer 38 covers the seat cushion 37.

The main seat 9a is supported by a hinge member (not shown), which is arranged at a front end of the storage box 33, to be able to turn forward, and covers the front storage portion 33b and the intermediate storage portion 33d (see Fig. 8) of the storage box 33 to be able to open and close the same.

The tandem seat 9b is supported by a hinge member (not shown) , which is arranged at a rear end of the storage box 33, to be able to turn rearward, and covers the rear storage portion 33c (see Fig. 14) of the storage box 33 to be able to open and close the same. When the main seat 9a and the tandem seat 9b, respectively, are opened forward and rearward, a whole region of the opening 33a of the storage box 33 is open to the top.

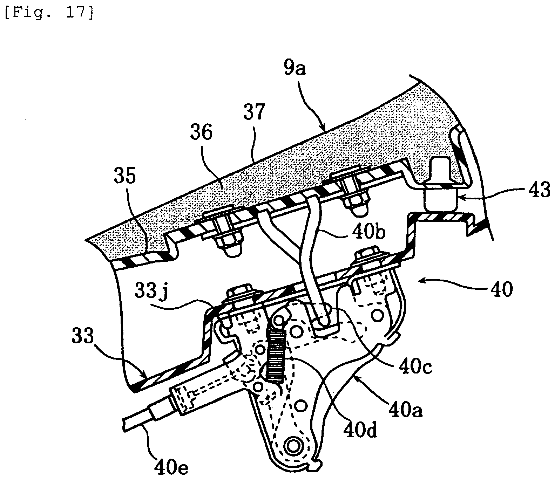

As shown in Fig. 17, locking mechanisms 40 for locking the main seat 9a to the storage box 33 are arranged on left and right sides of the main seat 9a. The left and right locking mechanisms 40 comprise a locking member 40a fixed to a lower surface of the step-down portion 33j of the storage box 33 and a striker 40b fixed to the seat bottom plate 35 of the main seat 9a.

The locking member 40a includes a hook portion 40c capable of latching on and unlatching from the striker 40a, a coil spring 40d, which biases the hook portion 40c in a direction of engagement, and an operating cable 40e for turning of the hook portion 40c to an engagement release position.

The main seat 9a is supported on the storage box 33 fixed to the body frame 2 described above. Accordingly, a load from a rider acting on the main seat 9a is transmitted to the body frame 2 through the storage box 33.

As shown in Fig. 18, the bottom seat plate 35 of the main seat 9a abuts against the storage box 33 with the first left and right elastic members 43, 43 therebetween and the storage box 33 abuts against the seat rails 21 of the body frame 2 with the second left and right elastic members 44, 44 therebetween.

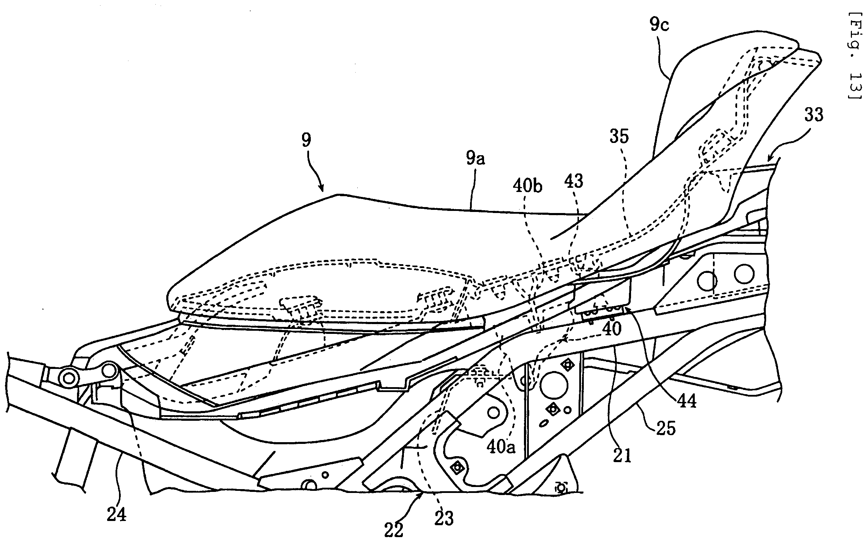

The first and second left and right elastic members 43, 44 are made of rubber, arranged in positions facing the buttocks when a rider is seated on the main seat 9a, and arranged so that positions in the longitudinal direction agree substantially with each other (see Fig. 13).

On the other hand, as shown in Fig. 18, the first and second elastic members 43, 44 are arranged in positions offset in the vehicle width direction. Specifically, a position a, in which the first elastic member 43 mounted to the main seat 9a abuts against the storage box 33, is offset by a length t2 from a center d of the seat rail 21 in an inward direction in the vehicle width direction. In contrast, a position b, in which the second elastic member 44 mounted to the storage box 33 abuts against the seat rail 21, is offset by a length tl from the center d of the seat rail 21 in an outward direction in the vehicle width direction. Consequently, the first and second elastic members 43, 44 are offset by a length t in the vehicle width direction.

The left and right first elastic members 43 comprise a columnar, elastic body 43a and an engagement portion 43b continuing from the elastic body 43a to project upward, and an axially extending hole 43c is formed in the center of the elastic body 43a. The first elastic member 43 is mounted to the bottom seat plate 35 by inserting the engagement portion 43b into a mounting hole 35a, which is formed on the seat bottom plate 35, from beneath.

A lower surface of the elastic body 43a faces an upper surface of the step-down portion 33j of the storage box 33 with a little clearance c therebetween. When a rider is seated on the main seat 9a, the sealing member 34 is elastically deformed to cause the elastic body 43a to abut against the step-down portion 33j.

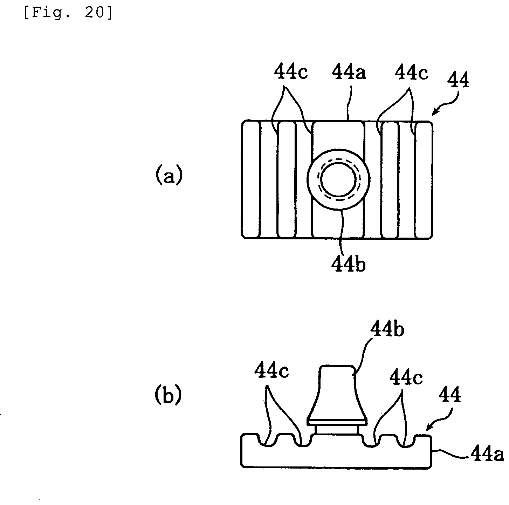

As shown in Fig. 20, the left and right, second elastic members 44 comprise a rectangular parallelepiped elastic member 44a and an engagement portion 44b formed to project upward from the elastic member 44a. As shown in Fig. 18, the second elastic member 44 is mounted to a bottom portion 33m of the receiving portion 33k of the storage box 33 by inserting the engagement portion 44b into a mounting hole 33n, which is formed on the bottom portion 33m, from beneath. Lower surfaces of the left and right second elastic members 44 abut against an upper surface of a bracket 45 being reversely U-shaped and fixed to the seat rail 21.

The left and right second elastic members 44 have such a property that a magnitude of its modulus of elasticity is dependent upon a direction of an external force. That is, the second elastic members 44 are set so as to make a modulus of elasticity in a longitudinal direction of a vehicle smaller than that in the vehicle width direction. Specifically, as shown in Fig. 20, a plurality of slits 44c extending in the vehicle width direction are formed on upper surfaces of the elastic members 44a of the second elastic members 44 so as to be spaced apart in predetermined intervals in the longitudinal direction, and portions formed with the respective slits 44c abut against the storage box 33. In addition, the slits 44c may be formed on lower surfaces of the elastic members 44a.

### <Footrest device as damping mechanism>

As shown mainly in Figs. 23 to 34, the left and right footrest devices 130, 130 comprise left and right foot brackets 131, 131 fixed to the body frame 2, left and right foot boards 133, 133 supported on the foot brackets 131 with elastic members 132 therebetween, and left and right foot mats 134, 134 arranged on upper surfaces of the foot boards 133, and details of the construction thereof are as follows. In addition, since the left and right footrest devices 130, 130 are of the same construction, the left footrest device 130 will be described and an explanation of the right footrest device 130 is omitted.

As shown in Fig. 23, the foot bracket 131 comprises a strip-shaped front bracket 131a and a strip-shaped rear bracket 131b, which extend outwardly of the body frame 2 in the vehicle width direction. The front and rear brackets 131a, 131b are arranged with a spacing therebetween in a longitudinal direction of the vehicle.

The front bracket 131a is joined to a front bent portion 20a of the downtube 20 and the rear bracket 131b is joined to a lower end 21a of the seat rail 21 (see Figs. 2 and 23).

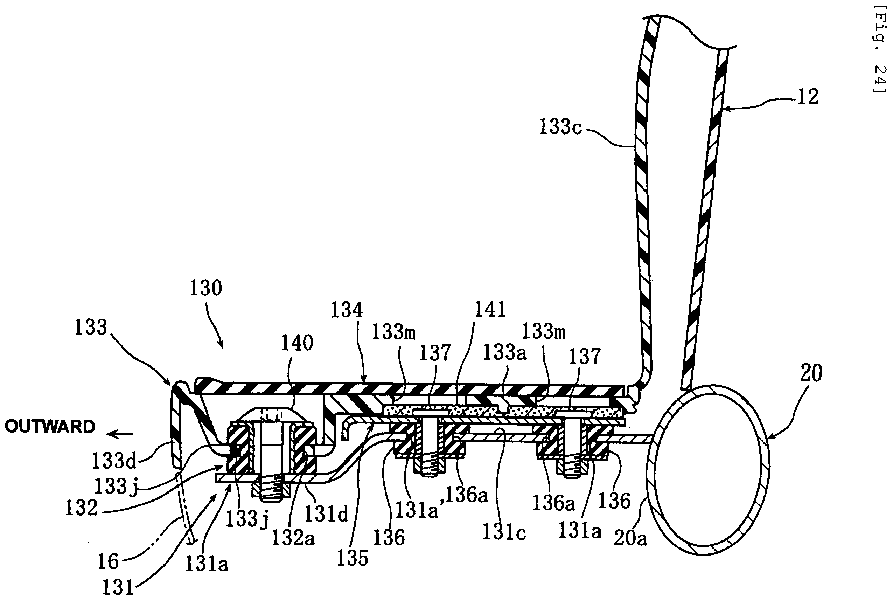

The front and rear brackets 131a, 131b are formed from a sheet metal to be reversely U-shaped as viewed in transverse cross section. As shown in Fig. 24, the front and rear brackets 131a, 131b comprise a horizontal portion 131c extending substantially in a horizontal and outward direction of the body frame 2 and a step-down portion 131d formed to be contiguous to an outer end of the horizontal portion 131c and lowered by a step therefrom. As shown in Fig. 23, the rear bracket 131b is positioned to be a little higher than the front bracket 131a.

As shown in Fig. 3, a foot frame 135 formed from a sheet metal bridges the front and rear brackets 131a, 131b. The foot frame 135 is in the form of a substantially rectangularly-shaped plate, which extends longitudinally as seen from above. A multiplicity of lightening holes 135a are formed on the foot frame 135.

As shown in Fig. 23, the foot frame 135 includes a stepped portion 135d inclined rearward and upward so that a rear portion 135b is positioned higher than a front portion 135c. A stable riding posture is obtained by positioning a rider's heel on the stepped portion 135d.

As shown in Fig. 24, a front end 135e of the foot frame 135 is fixed to the horizontal portion 131c of the front bracket 131a by bolts 137, 137 with a pair of left and right rubber grommets (elastic members) 136, 136 therebetween.

Annular grooves 136a are formed on outer peripheries of the respective rubber grommets 136 and opened edges 131a' of the front bracket 131a are fitted into the annular grooves 136a. The foot frame 135 abuts against upper surfaces of the rubber grommets 136.

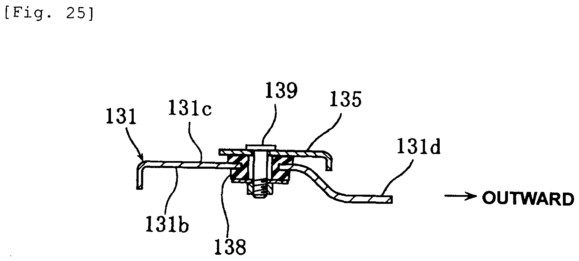

As shown in Fig. 25, a rear end 135f (see Fig. 23) of the foot frame 135 is fixed to the horizontal portion 131c of the rear bracket by a bolt 139 with a single rubber grommet (elastic member) 138 therebetween. The rubber grommet 138 is of the same structure as those of the rubber grommets 136.

In this manner, locations (two locations), in which the foot frame 135 is fixed to the front bracket 131a, are more in number than a location (one location), in which the foot frame is fixed to the rear bracket 131b.

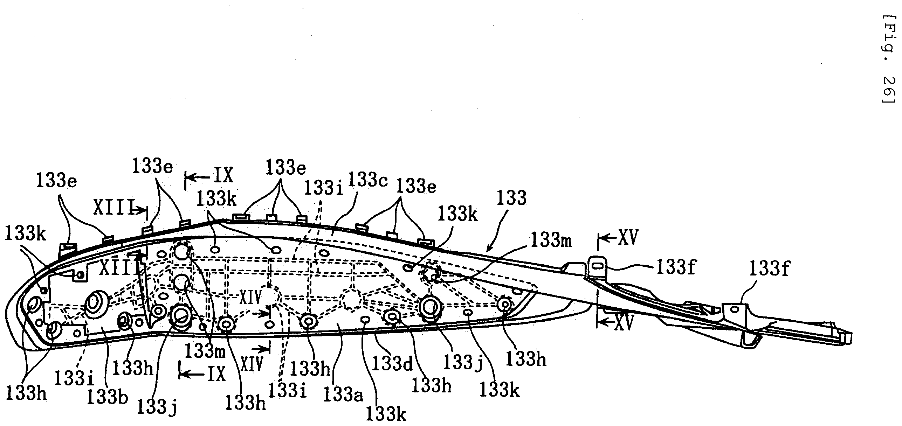

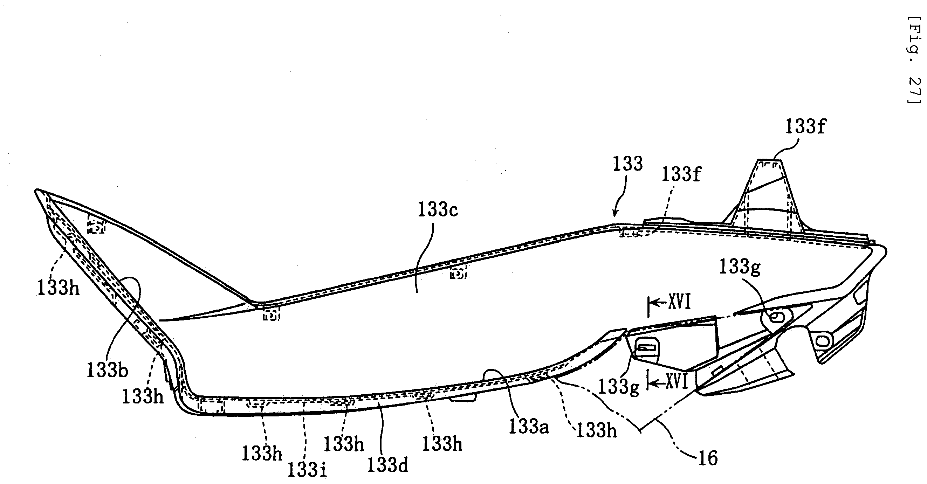

As shown in Figs. 26 and 27, the foot boards 133 are formed from a resin to comprise a board body 133a, which covers the step-down portions 131d of the front and rear brackets 131a, 131b and a whole surface of the foot frame 135 (see Fig. 24), a front foot rest portion 133b contiguous to a front edge of the board body 133a to extend obliquely and forwardly upward, and a longitudinal wall portion 133c rising from inner edges of the front foot rest portion 133b and the board body 133a to extend upward. As shown in Fig. 26, a front side of the board body 133a is of a wider dimension than a rear side thereof in the vehicle width direction as viewed from above.

Outer surfaces of the front foot rest portion 133b, an outer edge 133d of the board body 133a, and the longitudinal wall portion 133c are exposed to the outside and the exposed surfaces are subjected to armor treatment such as crimp processing, etc.

A peripheral edge of the front foot rest portion 133b is fixed in a manner to define a surface made substantially contiguous to the leg shield 12 and the bottom cover 16. Further, a lower edge of the outer edge 133d is fixed in a manner to define a surface made substantially contiguous to the bottom cover 16. Further, an upper edge of the longitudinal wall portion 133c is fixed in a manner to define a surface made substantially contiguous to the leg shield 12 and the side cover 13. Thereby, the foot boards 133 are surrounded by the leg shield 12, the body cover such as the side cover 13, the bottom cover 16, etc., which are adjacent thereto, and fixed to the body cover in the following structure.

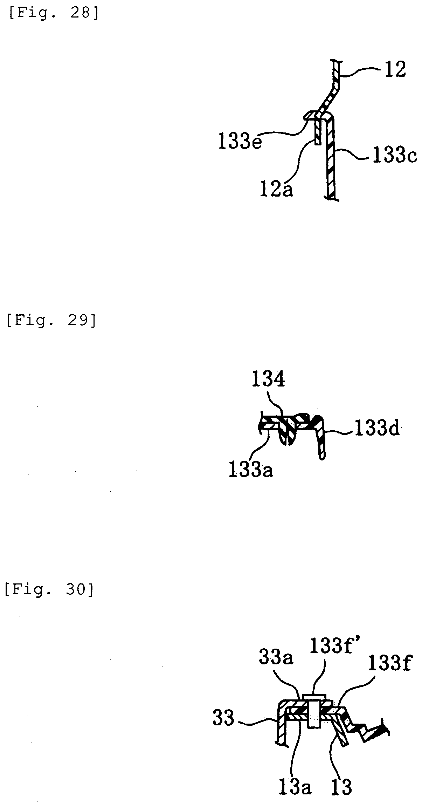

As shown in Fig. 26, a plurality of engagement pieces 133e are formed at predetermined intervals and bent inward at the upper edge of the longitudinal wall portion 133c. Latch pieces 12a of the leg shield 12 and the side cover 13 are inserted into engagement holes of the respective engagement pieces 133e (see Figs. 26 and 28).

A pair of front and rear fixation portions 133f, 133f are formed and bent inward at a rear end of the upper edge of the longitudinal wall portion 133c. The fixation portions 133f have a fastener 133f' clamping and fixing a fixation piece 13a of the side cover 13 to a lower surface thereof and clamping and fixing a fixation piece 33a of the storage box 33 to an upper surface thereof (see Figs. 26 and 30).

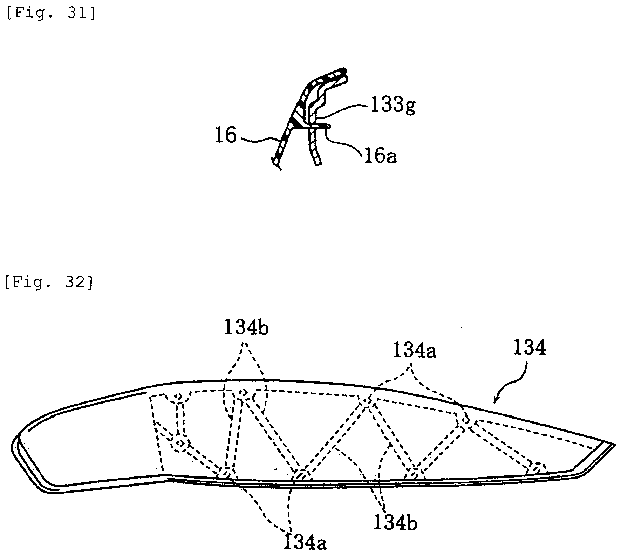

A rear end of a lower edge of the longitudinal wall portion 133c is covered by the bottom cover 16, a pair of front and rear engagement holes 133g, 133g (see Fig. 27) are formed at the rear end of the lower edge, and insertion pieces 16a of the bottom cover 16 are inserted into and fixed to the engagement holes 133g (see Fig. 31).

A plurality of mounting recesses 133h are formed at predetermined intervals in a longitudinal direction on the board body 133a and the front foot rest portion 133b. The respective mounting recesses 133h are fixed to the leg shield 12 and the bottom cover 16 through fasteners (not shown).

Lattice-shaped reinforcement ribs 133i for connection of the respective mounting recesses 133h are formed on a lower surface of the foot board 133. A multiplicity of foot mat insertion holes 133k are formed at predetermined intervals on an outer periphery of the foot board 133.

Front and rear mounting recesses 133j, 133j are formed on those portions of the board body 133a, which face the respective step-down portions 131d of the front and rear brackets 131a, 131b. As shown in Fig. 24, the respective mounting recesses 133j are fixed to the respective step-down portions 131d through the elastic members 132, 132 by bolts 140, 140.

The elastic members 132 comprise a rubber bush. Annular grooves 132a are formed on outer peripheries of the elastic members 132. Opened edges 133j' of the mounting recesses 133j are fitted into the annular grooves 132a and lower surfaces of the elastic members 132 abut against the step-down portions 131d.

Clearance holes 133m having a larger diameter than those of the bolts 137, 139 are formed on those portions of the board body 133a, which face the respective bolts 137, 139 (see Figs. 24 and 26). Thereby, vibrations from the body frame 2 are inhibited from being transmitted to the foot board 133 through the bolts 137, 139.

A sponge material 141 being an example of an elastic member is arranged between the foot frame 135 and the foot board 133. When a rider's load is applied to the foot board 133, the sponge material 141 is elastically deformed to enable the foot board 133 to abut against the foot frame 135. When the load is removed, a predetermined clearance is generated between the two members 133, 135 and the sponge material 141 fills in the clearance.

The foot mat 134 is formed from rubber and detachably arranged to cover upper surfaces of the board body 133a and the front foot rest portion 133b.

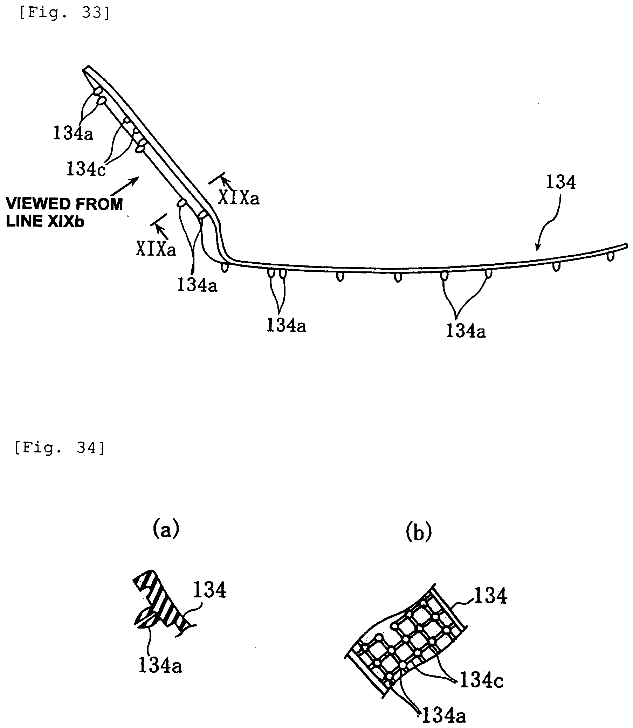

As shown in Fig. 32, formed on a back surface of the foot mat 134 are a multiplicity of clips 134a being inserted into and fixed to the respective insertion holes 133k of the foot board 133, and zigzag-shaped reinforcement ribs 134b and lattice-shaped reinforcement ribs 134c for connecting the respective clips 134a (see Fig. 34).

### <Effect of the embodiment>

According to the embodiment, since the engine unit 8 is supported directly by the body frame 2 to be able to swing vertically, responsiveness of a vehicle body to a throttle opening operation can be increased as compared to a conventional construction, that is, a construction, in which an engine unit is indirectly supported through a linkage to a body frame. Therefore, a feeling of directness at the time of start and acceleration can be improved. That is, in the case where a linkage is interposed between an engine unit and a body frame, when a throttle opening operation is performed to begin traveling from a stopped state, engine torque is once absorbed by the linkage in the course of being actually transmitted to a rear wheel and then transmitted to the rear wheel. Therefore, a delay in response to a throttle opening operation is felt. Consequently, a feeling is generated, in which a vehicle begins to advance after the throttle opening operation, and there is not obtained an adequate feeling of directness especially at the time of start. In contrast, since according to the embodiment the engine unit 8 is supported directly by the body frame 2 without interposition of a linkage therebetween, it is possible to suppress the problem described above.

In addition, the engine unit 8 includes a centrifugal clutch 17f. The centrifugal clutch 17f connects when the engine speed becomes equal to or higher than a predetermined rotating speed, and disconnects when the engine speed becomes lower than the predetermined rotating speed. The centrifugal clutch 17f disconnects at the time of idling and connects at the start and during traveling. The centrifugal clutch 17f of this kind is liable to generate vibrations when connection begins or when disconnection begins. In other words, in a so-called semi-clutched state, vibrations are liable to generate. According to the embodiment, however, it is possible to effectively inhibit such vibrations (for example, vibrations of 41 to 67 Hz) from being transmitted to a rider.

By the way, when the engine unit 8 is simply supported directly by the body frame 2, vibrations applied to a rider become large. On the other hand, when it is tried to arrange a balancer mechanism, which suppresses not only primary vibrations of an engine but also secondary vibrations, an engine unit is caused to become large-sized, complex, or high in cost. Hereupon, according to the embodiment, the balancer mechanism 27 is arranged on the engine unit 8 to suppress generation of primary vibrations of an engine. Thereby, it is possible to suppress vibrations of the engine unit 8 itself while inhibiting the engine unit 8 from becoming large-sized, complex, or high in cost. Therefore, it is possible to inhibit engine vibrations from being transmitted to a rider through the body frame 2 while the engine unit 8 is supported directly by the body frame 2.

Further, according to the embodiment, a damping mechanism is arranged on the distal portion of the vibration transmission path where a rider's body and a vehicle body contact. Thereby, vibrations, which cannot be suppressed by the balancer mechanism 27, for example, secondary vibrations of an engine, vibrations transmitted from the road surface, etc. can be suppressed by the damping mechanism. Specifically, such suppression is as follows.

That is, according to the embodiment, a rider's load acting on the seat 9 is transmitted to the body frame 2 through the storage box 33 made of a resin and mounted to the body frame 2, so that the storage box 33 functions as a damping member between the body frame 2 and the seat 9 and so transmission of vibrations from the body frame 2 to the seat 9 becomes hard. Consequently, it is possible to suppress engine vibrations or vibrations from the road surface, wherein these vibrations are transmitted through the seat 9 to a rider from the engine unit 8 and the body frame 2, thus enabling riding comfort to be improved.

Further, according to the embodiment, the bottom seat plate 35 of the main seat 9a abuts against the storage box 33 with the first left and right elastic members 43 therebetween, so that engine vibrations or vibrations from the road surface, wherein these vibrations are transmitted to a rider, can be absorbed by the elastic members 43. Accordingly, it is possible to further improve riding comfort.

Further, since the storage box 33 is caused to abut against the body frame 2 with the second left and right elastic members 44 therebetween, the vibrations can be absorbed also by the second elastic members 44, so that it is possible to further inhibit transmission of the vibrations to a rider.

According to the embodiment, the second elastic members 44 are directional such that a magnitude of its modulus of elasticity is dependent upon a direction of an external force. In detail, a plurality of slits 44c extending in the vehicle width direction are formed on the second elastic members 44 in the longitudinal direction whereby a modulus of elasticity in a longitudinal direction of a vehicle is made smaller than that in the vehicle width direction. Therefore, it is possible to further reliably suppress engine vibrations although the engine unit 8 is supported directly by the body frame 2. That is, in the case where the engine unit 8 is supported directly by the body frame 2 without any linkage therebetween, in other words, the engine unit 8 is mounted rigidly, vibrations at the time of acceleration and deceleration and vibrations due to slippage of a centrifugal clutch of the continuously variable transmission 17 are liable to be transmitted to a rider through the body frame 2. Such vibrations at the time of acceleration and deceleration and such vibrations due to slippage act in a longitudinal direction of a vehicle. Since the second elastic members 44 according to the embodiment are small in modulus of elasticity in the longitudinal direction, however, it is possible to reliably absorb vibrations in the longitudinal direction. On the other hand, since the modulus of elasticity in the vehicle width direction is set to be relatively large, it is possible to avoid a problem that interposition of elastic members leads to a decrease in feeling of rigidity in a width direction of a vehicle body at the time of cornering.

In addition, the modulus of elasticity referred to here does not refer to a modulus of elasticity of a material itself of the second elastic members 44 but to an apparent modulus of elasticity of the second elastic members 44 in a mounted state. In other words, the modulus of elasticity refers to a liability of the second elastic members 44 to deformation in a mounted state. Accordingly, the modulus of elasticity referred to here represents that liability to deformation, which the second elastic members 44 exhibit as a consequence, taking into consideration a shape and a mounted state of the second elastic members 44, or influences of members around the second elastic members 44, etc. However, of course, a material itself of the second elastic members 44 may be directional with the result that the second elastic members 44 in a mounted state exhibits directionality.

As shown in Fig. 18, according to the embodiment, a position a, in which the seat 9 abuts against the storage box 33, and a position b, in which the storage box 33 abuts against the seat rail 21, are made offset relative to each other in the vehicle width direction. Therefore, the storage box 33 becomes liable to be elastically deformed between the two abutment positions a, b, so that it is possible to further strengthen the function of absorbing the engine vibrations, etc.

As shown in Fig. 13, according to the embodiment, the first elastic members 43 and the second elastic members 44 are arranged below the rear end of the main seat 9a as viewed in side view. In other words, the first elastic members 43 and the second elastic members 44 are arranged in positions facing the buttocks when a rider is seated on the main seat 9a. As described above, the second elastic members 44 are directional to give a rider an appropriate feeling of directness and so liable to absorb vibrations in a longitudinal direction of a vehicle but hard to absorb vibrations in the vehicle width direction. Here, that portion of the seat 9, on which a rider's body weight acts most, is a portion corresponding to the buttocks. Therefore, when the second elastic members 44 are arranged in positions distant from the buttocks, there is a fear of a decrease in the effect of directionality. According to the embodiment, however, the second elastic members 44 are arranged in the vicinity of rider's buttocks, the effect of directionality is not decreased but it becomes possible to effectively give the feeling of directness to a rider.

As shown in Fig. 20, according to the embodiment, the modulus of elasticity of the second elastic members 44 is made directional by forming the grooves 44c on the upper surfaces of the second elastic members 44. However, similar grooves may be formed on lower surfaces of the second elastic members 44. Even in this case, a modulus of elasticity of the second elastic members 44 in a longitudinal direction of a vehicle is made smaller than that in the vehicle width direction, so that the second elastic members 44 can effectively absorb vibrations in the longitudinal direction of a vehicle.

According to the embodiment, however, the grooves 44c are formed on the upper surfaces of the second elastic members 44 whereby water falling from the seat 9 to flow into the receiving portions 33k (see Fig. 18) of the storage box 33 becomes liable to be discharged to the outside through the grooves 44c. Accordingly, the embodiment can also produce an effect that water is hard to collect in the receiving portions 33k of the storage box 33.

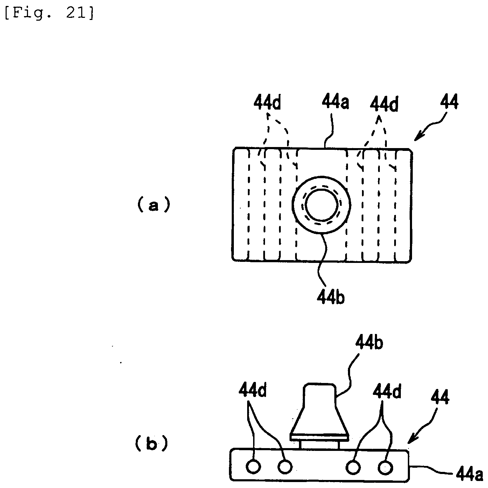

Further, instead of forming the grooves 44c on the surfaces, holes 44d extending in the vehicle width direction may be formed in the second elastic members 44 as shown in Fig. 21. Even in this case, a modulus of elasticity of the second elastic members 44 in a longitudinal direction of a vehicle is made smaller than that in the vehicle width direction, so that the second elastic members 44 can effectively absorb vibrations in the longitudinal direction of a vehicle.

According to the embodiment, directionality is given to the second elastic members 44 by contriving the shape of the second elastic members 44. However, a material itself of the second elastic members 44 may be anisotropic whereby the second elastic members 44 may be made directional. For example, the second elastic members 44 may be made of a material, whose modulus of elasticity in a longitudinal direction of a vehicle is smaller than that in the vehicle width direction.

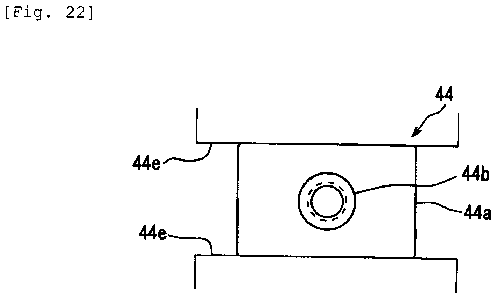

Also, the second elastic members 44 may be made directional by contriving a member around the second elastic members 44, in other words, contriving the mounting structure of the second elastic members 44 as shown in Fig. 22. In an example shown in Fig. 22, guides 44e for restriction of deformation of the second elastic members 44 in a left and right direction are arranged on both left and right sides of the second elastic members 44, respectively. No guides are arranged on front and rear sides of the second elastic members 44, so that the second elastic members 44 can be freely deformed in a longitudinal direction. Accordingly, in the present example, the second elastic members 44 are readily deformed in the longitudinal direction as compared to the case in a left and right direction, so that the directionality can be given. Therefore, in the present example, the second elastic members 44 can effectively absorb vibrations in the longitudinal direction of a vehicle.

While a modulus of elasticity of the second elastic members 44 in the embodiment is made directional, a modulus of elasticity of the first elastic members 43 may be made directional. Of course, both the first elastic members 43 and the second elastic members 44 may be made directional. In the present invention, which is defined by claim 1, an elastic member of the damping mechanism arranged on the first distal end portion, is made of a material, whose modulus of elasticity in a longitudinal direction of a vehicle is smaller than that in the vehicle width direction.

Constituent vehicle parts in the embodiment are ones interposed between the seat 9 and the body frame 2 and comprise the storage box 33, the first elastic members 43, and the second elastic members 44. According to the embodiment, directionality is imparted to the second elastic members 44 whereby the constituent vehicle parts exhibit directionality as a whole. However, directionality may be imparted to the storage box 33 itself. In this case, the first elastic members 43 and the second elastic members 44 are not necessarily needed.

Further, while the embodiment has been described taking the article storage box 33 as an example of one of the constituent vehicle parts, the constituent vehicle parts are not limited thereto but, for example, resin parts such as a battery storage case, a rear fender, a mud guard, etc. can be adopted as constituent vehicle parts of the invention.

In addition, while a constituent vehicle part is one interposed between the seat 9 and the body frame 2, it may be a part of the seat 9 or a part of the body frame 2 apparently. Such a part is included in the constituent vehicle part of the invention.

According to the embodiment, the weights 125 are mounted to both ends of the handle bar 5a with the elastic members 124 therebetween, so that it is possible to absorb engine vibrations or vibrations from the road surface, wherein these vibrations are transmitted to a rider through the handle bar 5a from the body frame 2 and the front fork 6. Accordingly, it is possible to improve a riding comfort. Vibrations of a desired frequency can be absorbed by appropriately selecting, for example, an elastic force (or a modulus of elasticity being an example of physical quantities representative of an elastic force, material hardness, etc.) of the elastic member 124 and a size (or weight) of the weights 125. A depression effect can be produced on, for example, 0.5 degree vibrations, the frequency of which amounts to two times that of primary vibrations.

It is possible to appropriately select a weight of the weights 125, which is not especially limited in numerical value but preferably 200 g or more, more specifically, 250 g or more. By using such weights 125, it is possible to effectively absorb vibrations of, for example, 41 to 67 Hz. In addition, such vibrations of 41 to 67 Hz are ones being liable to generate when the centrifugal clutch 17f is put in a semi-clutched state as at the time of starting or the like.

According to the embodiment, the weights 125 are mounted to the handle bar 5a with the elastic members 124 therebetween whereby vibrations transmitted to a rider are absorbed. Therefore, when the handle bar 5a is to be mounted to the steering shaft 6b of the front fork 6, it can be directly mounted without any elastic member therebetween. Rigidity, with which the handle bar 5a is mounted to the front fork 6, becomes larger than that, with which the weights 125 are mounted to the handle bar 5a.

According to the embodiment, it is possible to increase that rigidity, with which the handle bar 5a is mounted to the front fork 6, so that it is possible to restrict that decrease in feeling of directness, which is caused by a portion of the steering handle 5 mounted to the front fork by an elastic member. In order to further increase a vibration isolating effect, it is conceivable to provide an elastic member on that portion of the handle bar, which is mounted to the front fork, but there is in this case a fear of a decrease in feeling of directness at the time of starting and at the time of acceleration according to a modulus of elasticity (or hardness) of the elastic member. According to the embodiment, however, it is possible to suppress such decrease in feeling of directness.

Further, according to the embodiment, the elastic members 124 are structured such that the elastic body 124c is fixed between the outer cylinder 124a and the inner cylinder 124b by baking. Further, a construction is adopted, in which the elastic members 124 are pressure fitted into the handle bar 5a. Therefore, a mounting construction for the elastic members 124 can be simplified.

Furthermore, a construction is adopted, in which the weights 125 are mounted detachably to the elastic members 124 from outside the handle. Therefore, absorbable vibrations can be adjusted in frequency by exchanging the weights 125 by ones having a different weight.

As shown in Fig. 8, according to the embodiment, the handle bar 5a extends rearward and obliquely upward from the front fork 6 to extend rearward and obliquely downward. In this manner, the handle bar 5a extends to a position close to a rider's body. Accordingly, it is possible to achieve a further improvement in feeling of directness.

In addition, mounting rigidity referred to in the specification of the present application means rigidity of mounted portions in the case where a plurality of members are mounted to one another. In case of mounting, for example, two members, the mounting rigidity is increased when they are firmly mounted to each other so as to eliminate generation of slippage or the like therebetween. Conversely, when slippage or the like is generated between them or an elastic member is interposed therebetween, the mounting rigidity is decreased.

Also, according to the embodiment, the footrest devices 130 comprise the foot brackets 131 bonded and fixed to the body frame 2, the foot boards 133 supported on the foot brackets 131 with the elastic members 132 therebetween, and the foot mats 134 arranged on the upper surfaces of the foot boards 133. Therefore, in particular, the elastic members 132 can absorb engine vibrations or vibrations from the road surface, wherein these vibrations are transmitted to a rider through the foot boards 133 from the body frame 2 and the foot brackets 131, improving riding comfort.

The foot bracket 131 comprises the front bracket 131a and the rear bracket 131b, which respectively extend out of the body frame 2 in the vehicle width direction and are arranged with a spacing therebetween in a longitudinal direction of the vehicle. The foot frame 135 bridges the front and rear brackets 131a, 131b. Further, the foot frame 135 is fixed to the front and rear brackets 131a, 131b with the rubber grommets 136, 138 therebetween. Such a construction has the foot boards 133 supported on the foot frame 135. Accordingly, as compared with that construction, in which a foot bracket is in the form of a single plate being lengthy in a longitudinal direction and fixed directly to a body frame and foot boards are supported on the foot bracket with an elastic member therebetween, elastic members being small in number are used to enable effective suppression of transmission of vibrations. That is, as described above, in case of adopting a foot bracket being lengthy in a longitudinal direction, it is necessary to interpose a multiplicity of elastic members between the bracket and foot boards, but the construction of the embodiment can produce an adequate vibration absorbing effect only by means of interposition of elastic members on the front and rear brackets 131a, 131b.

Besides, according to the embodiment, the foot frame 135 and the foot boards 133 are not joined directly, so that the foot boards 133 are longitudinally movable relative to the foot frame 135. Therefore, vibrations transmitted to a rider in a longitudinal direction can be absorbed by the foot boards 133 and the foot frame 135.

Also, according to the embodiment, the elastic members 132 are arranged on the step-down portions 131d of the front and rear brackets 131a, 131b, which are disposed in an outward direction out of the foot frame 135, and the foot boards 133 are fixed to the foot brackets 131 with the elastic members 132 therebetween. Thereby, it is possible to ensure the support strength of the foot board 133, which bears the load of a rider and to heighten an accuracy with which the foot board 133 mates with the side cover 16, which faces an outer edge thereof.

According to the embodiment, since the sponge material 141 is arranged between the foot board 133 and the foot frame 135, it is possible to adequately bear the load of a rider while suppressing vibrations and reducing a chatter sound. That is, with a scooter-type motorcycle of this kind, the foot board 133 has a relatively large area and is formed from a resin, so that a clearance is liable to generate between the foot board 133 and the foot frame 135. While this clearance is liable to be responsible for vibrations and a chatter sound, the embodiment can inhibit generation of vibrations and a chatter sound since the sponge material 141 is arranged between the foot board 133 and the foot frame 135. When a rider applies a load onto the foot board 133, the sponge material 141 is elastically deformed to cause the foot board 133 to abut against the foot frame 135 with the result that it is possible to fully bear a rider's load.

As shown in Fig. 23, according to the embodiment, since the foot frame 135 is formed with that stepped portion 135d, which is inclined rearward and upward so that the rear portion 135b is positioned higher than the front portion 135c, the stepped portion 135c can support a rider's heel and so a stable riding posture is obtained.

According to the embodiment, there are two locations, in which the foot frame 135 is fixed to the front bracket 131a, and one location, in which the foot frame is fixed to the rear bracket 131b. That is, there are less locations of fixation on the rear side than locations of fixation on the front side. Therefore, a rear portion of the foot frame 135 and hence the foot board 133 can be made small in dimension in the vehicle width direction, thus enabling an improvement in quality, with which a rider puts a foot thereon.

Also, generally, the more locations of fixation, the more intensely a feeling of directness can be sensed. According to the embodiment, there are more locations of fixation on the front side than locations of fixation on the rear side, so that a feeling of directness can be particularly intensely sensed in a region in front of the foot frame 135. By the way, human feet are more sensitive at a the tip of the toe than at the heel. Accordingly, according to the embodiment, a rider can sense a feeling of directness more sensibly since a feeling of directness can be sensed intensely on that front portion of the foot frame 135, on which a more sensitive tip of a toe is put.

According to the embodiment, the foot boards 133 are fixed to the leg shield 12, the side cover 13, the bottom cover 16, which constitute adjacent cover members (see Figs. 28, 30, and 31). Therefore, it is possible to ensure that strength, with which the foot board 133 is mounted, while increasing an accuracy, with which the foot board 133 mates with the respective covers 12, 13, 16, although there is adopted a construction, in which the foot board 133 is not fixed directly to the foot frame 135.

### INDUSTRIAL APPLICABILITY

As described above, the invention is useful for motorcycles.

## Claims

1. A motorcycle (1) comprising a vehicle body (1A) having a body frame (2),
an engine unit (8) having a balancer mechanism (27), which inhibits engine vibrations caused by a primary inertial force, and supported directly on the body frame (2) to be able to swing vertically,
wherein the vehicle body (1A) comprises a seat (9) supported on the body frame (2), a front fork (6) supported on the body frame (2) to be made steerable, a handle bar (5a) mounted to the front fork (6), and a footrest device (130) supported on the body frame (2),
**characterized by**
a damping mechanism (43, 44) arranged on the distal portion of a vibration transmission path, at which a rider's body and the vehicle body (1A) contact with each other,
wherein the distal portion of the vibration transmission path comprises a first distal end portion being a portion between the seat (9) and the body frame (2), a second distal end portion being both end portions of the handle bar (5a), and a third distal end portion being the footrest device (130),
wherein the seat (9) is supported on the body frame (2) with a vehicle constituent part therebetween,
wherein the damping mechanism (43, 44) is arranged on at least the first distal end portion,
wherein the damping mechanism arranged on the first distal end portion comprises an elastic member (43, 44), which constitutes a part of or a whole of the vehicle constituent part, and
wherein a material itself of the elastic member (43, 44) is anisotropic such that a modulus of elasticity of the material in a longitudinal direction of a vehicle is smaller than that in the vehicle width direction.

2. The motorcycle (1) according to claim 1, wherein the damping mechanism (43, 44, 124, 125) is arranged on the first distal end portion and the second distal end portion, respectively.

3. The motorcycle (1) according to claim 1, wherein the damping mechanism (43, 44, 131, 132, 133, 134) is arranged on the first distal end portion and the third distal end portion, respectively.

4. The motorcycle (1) according to claim. 1, wherein the damping mechanism (43, 44, 124, 125, 131, 132, 133, 134) is arranged on the first distal end portion, the second distal end portion, and the third distal end portion, respectively.

5. The motorcycle (1) according to claim 1, wherein the damping mechanism (124, 125) arranged on the second distal end portion comprises elastic members (124) mounted to both end portions of the handle bar (5a), and weights (125) mounted to both end portions of the handle bar (5a) through the elastic members.

6. The motorcycle (1) according to claim 1, wherein the damping mechanism (131, 132, 133, 134) arranged on the third distal end portion comprises a foot bracket (131) fixed to the body frame (2), an elastic member (132) mounted to the foot bracket (131), a foot board (133) supported on the foot bracket (131) with the elastic member (132) therebetween, and a foot mat (134) arranged on the foot board (133).

7. The motorcycle (1) according to claim 1, wherein the engine unit (8) includes a centrifugal clutch.

## Patentansprüche

1. Ein Motorrad (1), das folgende Merkmale aufweist:
eine Fahrzeugkarosserie (1A), die einen Karosserierahmen (2) aufweist,
eine Motoreinheit (8), die einen Ausgleichsmechanismus (27) aufweist, der Motorschwingungen, die durch eine primäre Trägheitskraft bewirkt werden, hemmt, und die direkt auf dem Karosserierahmen (2) getragen ist, um in der Lage zu sein, eine vertikale Schwenkung auszuführen,
wobei die Fahrzeugkarosserie (1A) einen auf dem Karosserierahmen (2) getragenen Sitz (9), eine Vorderradgabel (6), die auf dem Karosserierahmen (2) getragen ist, um lenkfähig gestaltet zu werden, einen an der Vorderradgabel (6) angebrachten Lenker (5a) und eine an dem Karosserierahmen (2) getragene Fußstützenvorrichtung (130) aufweist,
**gekennzeichnet durch** einen
Dämpfungsmechanismus (43, 44), der an dem distalen Abschnitt eines Schwingungsübertragungswegs, an dem der Körper eines Fahrers und die Fahrzeugkarosserie (1A) miteinander in Kontakt stehen, angeordnet ist,
wobei der distale Abschnitt des Schwingungsübertragungswegs einen ersten distalen Endabschnitt, der ein Abschnitt zwischen dem Sitz (9) und dem Karosserierahmen (2) ist, einen zweiten distalen Endabschnitt, der beide Endabschnitte des Lenkers (5a) ist, und einen dritten distalen Endabschnitt, der die Fußstützenvorrichtung (130) ist, aufweist,
wobei der Sitz (9) auf dem Karosserierahmen (2) getragen ist, wobei ein Fahrzeugbestandteil zwischen denselben befindlich ist,
wobei der Dämpfungsmechanismus (43, 44) an zumindest dem ersten distalen Endabschnitt angeordnet ist,
wobei der an dem ersten distalen Endabschnitt angeordnete Dämpfungsmechanismus ein elastisches Bauglied (43, 44) aufweist, das einen Teil des oder den gesamten Fahrzeugbestandteil darstellt, und
wobei ein Material selbst des elastischen Bauglieds (43, 44) anisotrop ist, so dass ein Elastizitätsmodul des Materials in einer Längsrichtung eines Fahrzeugs kleiner ist als der in der Breitenrichtung des Fahrzeugs.

2. Das Motorrad (1) gemäß Anspruch 1, bei dem der Dämpfungsmechanismus (43, 44, 124, 125) an dem ersten distalen Endabschnitt beziehungsweise an dem zweiten distalen Endabschnitt angeordnet ist.

3. Das Motorrad (1) gemäß Anspruch 1, bei dem der Dämpfungsmechanismus (43, 44, 131, 132, 133, 134) an dem ersten distalen Endabschnitt beziehungsweise dem dritten distalen Endabschnitt angeordnet ist.

4. Das Motorrad (1) gemäß Anspruch 1, bei dem der Dämpfungsmechanismus (43, 44, 124, 125, 131, 132, 133, 134) an dem ersten distalen Endabschnitt, dem zweiten distalen Endabschnitt beziehungsweise dem dritten distalen Endabschnitt angeordnet ist.

5. Das Motorrad (1) gemäß Anspruch 1, bei dem der Dämpfungsmechanismus (124, 125), der an dem zweiten distalen Endabschnitt angeordnet ist, elastische Bauglieder (124), die an beiden Endabschnitten des Lenkers (5a) angebracht sind, und Gewichte (125), die durch die elastischen Bauglieder an beiden Endabschnitten des Lenkers (5a) angebracht sind, aufweist.

6. Das Motorrad (1) gemäß Anspruch 1, bei dem der Dämpfungsmechanismus (131, 132, 133, 134), der an dem dritten distalen Endabschnitt angeordnet ist, eine Fußhalterung (131), die an dem Karosserierahmen (2) befestigt ist, ein an der Fußhalterung (131) angebrachtes elastisches Bauglied (132), ein an der Fußhalterung (131) getragenes Trittbrett (133), wobei sich das elastische Bauglied (132) dazwischen befindet, und eine an dem Trittbrett (133) angeordnete Fußmatte (134) aufweist.

7. Das Motorrad (1) gemäß Anspruch 1, bei dem die Motoreinheit (8) eine Fliehkraftkupplung umfasst.

## Revendications

1. Motocyclette (1) comprenant une carrosserie de véhicule (1A) présentant un châssis de carrosserie (2),
une unité de moteur (8) présentant un mécanisme d'équilibrage (27) qui inhibe les vibrations de moteur provoquées par une force d'inertie primaire, et supportée directement sur le châssis de carrosserie (2) pour pouvoir pivoter verticalement,
dans lequel la carrosserie de véhicule (1A) comprend un siège (9) supporté sur le châssis de carrosserie (2), une fourche avant (6) supportée sur le châssis de carrosserie (2) de manière à être orientable, un guidon (5a) monté sur la fourche avant (6), et un dispositif repose-pieds (130) supporté sur le châssis de carrosserie (2),
**caractérisée par**
un mécanisme d'amortissement (43, 44) disposé sur la partie distale d'un trajet de transmission de vibrations auquel le corps d'un conducteur et la carrosserie de véhicule (1A) entrent en contact l'un avec l'autre,
dans laquelle la partie distale du trajet de transmission de vibrations comprend une première partie d'extrémité distale qui est une partie entre le siège (9) et le châssis de carrosserie (2), une deuxième partie d'extrémité distale qui est constituée des deux parties d'extrémité du guidon (5a), et une troisième partie d'extrémité distale qui est le dispositif repose-pieds (130),
dans laquelle le siège (9) est supporté sur le châssis de carrosserie (2) avec une partie constitutive du véhicule entre eux,
dans laquelle le mécanisme d'amortissement (43, 44) est disposé sur au moins la première partie d'extrémité distale,
dans laquelle le mécanisme d'amortissement disposé sur la première partie d'extrémité distale comprend un élément élastique (43, 44) qui constitue une partie ou la totalité de la partie constitutive du véhicule, et
dans laquelle un matériau lui-même de l'élément élastique (43, 44) est anisotrope de sorte qu'un module d'élasticité du matériau dans une direction longitudinale d'un véhicule soit inférieur à celui dans la direction de la largeur du véhicule.

2. Motocyclette (1) selon la revendication 1, dans laquelle le mécanisme d'amortissement (43, 44, 124, 125) est disposé respectivement sur la première partie d'extrémité distale et la deuxième partie d'extrémité distale.

3. Motocyclette (1) selon la revendication 1, dans laquelle le mécanisme d'amortissement (43, 44, 131, 132, 133, 134) est disposé respectivement sur la première partie d'extrémité distale et la troisième partie d'extrémité distale.

4. Motocyclette (1) selon la revendication 1, dans laquelle le mécanisme d'amortissement (43, 44, 124, 125, 131, 132, 133, 134) est disposé respectivement sur la première partie d'extrémité distale, la deuxième partie d'extrémité distale et la troisième partie d'extrémité distale.

5. Motocyclette (1) selon la revendication 1, dans laquelle le mécanisme d'amortissement (124, 125) disposé sur la deuxième partie d'extrémité distale comprend des éléments élastiques (124) montés sur les deux parties d'extrémité du guidon (5a) et des poids (125) montés sur les deux parties d'extrémité du guidon (5a) par l'intermédiaire des éléments élastiques.

6. Motocyclette (1) selon la revendication 1, dans laquelle le mécanisme d'amortissement (131, 132, 133, 134) disposé sur la troisième partie d'extrémité distale comprend un support de pied (131) fixé au châssis de carrosserie (2), un élément élastique (132) monté sur le support de pied (131), un marchepied (133) supporté sur le support de pied (131) avec l'élément élastique (132) entre eux, et un tapis de pied (134) disposé sur le marchepied (133).

7. Motocyclette (1) selon la revendication 1, dans laquelle l'unité de moteur (8) comprend un embrayage centrifuge.
